# EUROPÄISCHE PATENTSCHRIFT

(11) **EP 1 207 333 B1**
(45) Veröffentlichungstag und Bekanntmachung des Hinweises auf die Patenterteilung: **29.09.2004**
(21) Anmeldenummer: 01125027.1
(22) Anmeldetag: 20.10.2001
(51) Int. Cl.: F16L 47/00

(54) **Rohrartiger Stutzen**
Tubular connecting piece
Embout tubulaire

(30) Priorität: 17.11.2000 DE 10056974
(43) Veröffentlichungstag der Anmeldung: 22.05.2002
(73) Patentinhaber: Rasmussen GmbH, 63477 Maintal (DE)
(72) Erfinder: Cassaro, Antonio, 63477 Maintal (DE); Pescheck, Carsten, 63486 Bruchköbel (DE); Sachs, Harald, 60386 Frankfurt/Main (DE); Steinkamp, Christoph, 63599 Bieber (DE)
(74) Vertreter: Knoblauch, Andreas, Dr.-Ing.

(56) Entgegenhaltungen:
- DE-A- 19 533 920
- DE-C- 19 535 413

## Beschreibung

Die Erfindung bezieht sich auf einen rohrartigen Stutzen zum Anschließen an einer Öffnung eines Behälters aus überwiegend thermoplastischem Kunststoff, insbesondere Polyethylen, mit einem rohrförmigen ersten Teil, der überwiegend thermoplastischen, allenfalls schwach quellfähigen Kunststoff aufweist, und mit einem ringförmigen zweiten Teil aus überwiegend thermoplastischem, stärker quellfähigem Kunststoff, der mit seinem den kleineren Durchmesser aufweisenden ersten Rand zwischen zwei den ersten Teil umgebenden Rippen durch Umspritzen des einen mit dem anderen der beiden Teile stoff- und formschlüssig mit dem ersten Teil verbunden und mit seinem den größeren Durchmesser aufweisenden zweiten Rand auf dem Rand der Öffnung des Behälters stoffschlüssig zu befestigen ist.

Bei einem bekannten Stutzen dieser Art (DE 19 533 920 A1) hat der ringförmige zweite Teil einen etwa S-förmig abgestuften Querschnitt mit einem radial nach innen zwischen die Rippen des ersten Teils ragenden ersten Flansch und einem radial nach außen ragenden zweiten Flansch. Die Behälteröffnung hat einen sich von innen nach außen abgestuft erweiternden Durchmesser, so daß sich in der Behälteröffnung auf der Innenseite des Behälters ein radial nach innen vorstehender Ringflansch ergibt. Auf diesem Ringflansch wird der zweite, radial äußere Flansch des ringförmigen zweiten Teils stoffschlüssig befestigt. Die Art der stoffschlüssigen Verbindung ist dort nicht angegeben. Würden sie unter Zuführung von Wärme verschmolzen, müßte ein axialer Druck auf die radialen, sich berührenden Flächen des zweiten Ringflansches und des Öffnungsflansches ausgeübt werden. Dabei bestünde die Gefahr, daß sich der Flansch in der Öffnung und auch der zweite Flansch des Ringes verbiegen. Eine Klebeverbindung würde eine material- und arbeitsaufwendige Einbringung eines Klebstoffs oder Haftvermittlers erfordern. Wenn der Behälter einen Kraftstoff, wie Benzin oder Dieselöl, enthält, besteht die Gefahr, daß der ringförmige zweite Teil quillt, wenn der freiliegende Teil seiner Innenseite mit dem Kraftstoff in Berührung kommt. Dabei besteht die Gefahr, daß die auf der Innenseite des ringförmigen zweiten Teils liegende Rippe des ersten Teils einreißt und der Kraftstoff außerdem zwischen den radial inneren ersten Flansch des Rings und die axial innere Rippe des rohrförmigen ersten Teils eindringt und sich die Quellung weiter bis unmittelbar an das rohrförmige erste Teil fortsetzt, so daß sich die Verbindung zwischen dem ersten und dem zweiten Teil schließlich löst oder zumindest undicht wird und mithin der Kraftstoff aus dem Behälter austreten kann.

Der Erfindung liegt die Aufgabe zugrunde, einen rohrartigen Stutzen der eingangs genannten Art anzugeben, bei dem die Verbindung der beiden Teile auch einer Quellung des Kunststoffs des zweiten Teils bei einer Berührung mit einer ihn aufquellenden Flüssigkeit, insbesondere Kraftstoff, wie Benzin oder Dieselöl, Stand hält und die Verbindung zwischen dem zweiten Teil und dem Behälter zuverlässiger als Schmelzverbindung herstellbar ist.

Erfindungsgemäß ist diese Aufgabe dadurch gelöst, daß der zweite Teil im wesentlichen glockenförmig ausgebildet ist und die zwischen seinen Rändern liegende Rippe eine mit der Innenseite des zweiten Teils verschmolzene umlaufende, biegsame Lippe aufweist, die sich zum zweiten Rand des zweiten Teils hin erstreckt, so daß der größte Teil der Innenseite des zweiten Teils durch den ersten Teil abgedeckt ist.

Bei dieser Ausbildung der beiden Teile schützt die die innere Rippe des ersten Teils verlängernde Lippe zusätzlich einen großen Teil der Innenseite des zweiten Teils vor einer Berührung mit im Behälter enthaltenem Kraftstoff. Die Lippe läßt zwar noch einen kleinen Teil der Innenseite des zweiten Teils frei, so daß der zweite Teil bei einer Berührung mit einer Flüssigkeit, wie Kraftstoff, weiterhin quellen könnte. Die Quellung würde jedoch zum einen überwiegend zur weitgehend freiliegenden Außenseite des zweiten Teils hin erfolgen, ohne daß dadurch die Gefahr einer Rißbildung im zweiten Teil bestünde. Da die Lippe biegsam ist, kann sie auch einer Quellung zur Innenseite des zweiten Teils nachgeben, ohne einzureißen. Der Kraftstoff kann daher auch nicht weiter, wie im Falle einer Rißbildung in der inneren Rippe, zwischen die Rippen eindringen. Zwischen der Stirnfläche des den größeren Durchmesser aufweisenden Rands des ringförmigen zweiten Teils und der Außenseite des Randbereiches der Öffnung im Behälter kann auf einfache Weise eine Schmelzverbindung hergestellt werden, zum Beispiel durch Spiegelschweißen, wobei die Stirnfläche des den größeren Durchmesser aufweisenden Randes des ringförmigen zweiten Teils gegen die Außenseite des Behälter gedrückt wird, ohne daß sich der Behälterrand verformt, da eine Abstufung des Durchmessers des Behälterrandes und damit ein radial innerer dünnerer Flansch des Behälterrandes, auf dem der Rand des ringförmigen zweiten Teils aufsetzen würde, aufgrund des sich zum Behälter hin radial erweiternden zweiten Teils entfallen kann. Einen kleinen Teil der Innenseite des zweiten Teils nicht durch die Lippe abzudecken hat den Vorteil, daß der beim Andrücken des den größeren Durchmesser aufweisenden Randes des zweiten Teils an der Außenseite des Behälters bei der Herstellung der Schmelzverbindung entstehende Schweißwulst sich ungehindert ausweiten kann.

Vorzugsweise ist dafür gesorgt, daß der zweite Teil auf der Innenseite seines ersten Randes mit radialen Vorsprüngen versehen ist, die in das Material des ersten Teils zwischen den Rippen eingreifen. Dadurch ergibt sich zusätzlich eine formschlüssige Verdrehsicherung zwischen den beiden Teilen, so daß die Verbindung zwischen den beiden Teilen der Torsionskraft standhält, die bei Ausübung eines unabsichtlichen Drehmoments um die Längsmittelachse des rohrförmigen ersten Teils zwischen den beiden Teilen höher als zwischen dem zweiten Teil und dem Behälter ist.

Günstig ist es ferner, wenn sich die Vorsprünge im zweiten Teil axial erstrecken und sowohl ihr transversaler als auch ihr axialer Schnitt eine weitgehend trapezförmige Kontur aufweist. Diese Formgebung stellt sicher, daß beim Umspritzen des den kleineren Durchmesser aufweisenden Randes des ringförmigen zweiten Teils beim Formen des ersten Teils in einem Formwerkzeug das Material des zweiten Teils die Vorsprünge eng umfließt, ohne Lunker zu bilden.

Ferner kann der erste Rand des zweiten Teils eine nach innen abfallende Schräge aufweisen. Diese stellt sicher, daß der Druck des axial gegen die Schräge in das Formwerkzeug eingespritzten Materials des ersten Teils eine Radialkomponente erhält, die den zweiten Teil fest gegen die Innenseite des Formwerkzeugs drückt, so daß der zweite Teil beim Anspritzen des ersten Teils weniger leicht in Axialrichtung verformt wird.

Die Erfindung wird im folgenden anhand eines bevorzugten Ausführungsbeispiels in Verbindung mit der Zeichnung näher beschrieben. Hierin zeigen:
- Fig. 1: einen Axialschnitt eines erfindungsgemäßen rohrartigen Stutzens, der auf dem Öffnungsrand eines Behälters durch eine Schmelzverbindung befestigt ist,
- Fig. 2: den Schnitt II-II der Fig. 1,
- Fig. 3: den Schnitt III-III der Fig. 2,
- Fig. 4: die Anordnung nach Fig. 1 ohne den inneren Teil des rohrförmigen Stutzens,
- Fig. 5: den Schnitt V-V der Fig. 4 und
- Fig. 6: den Schnitt VI-VI der Fig. 5.

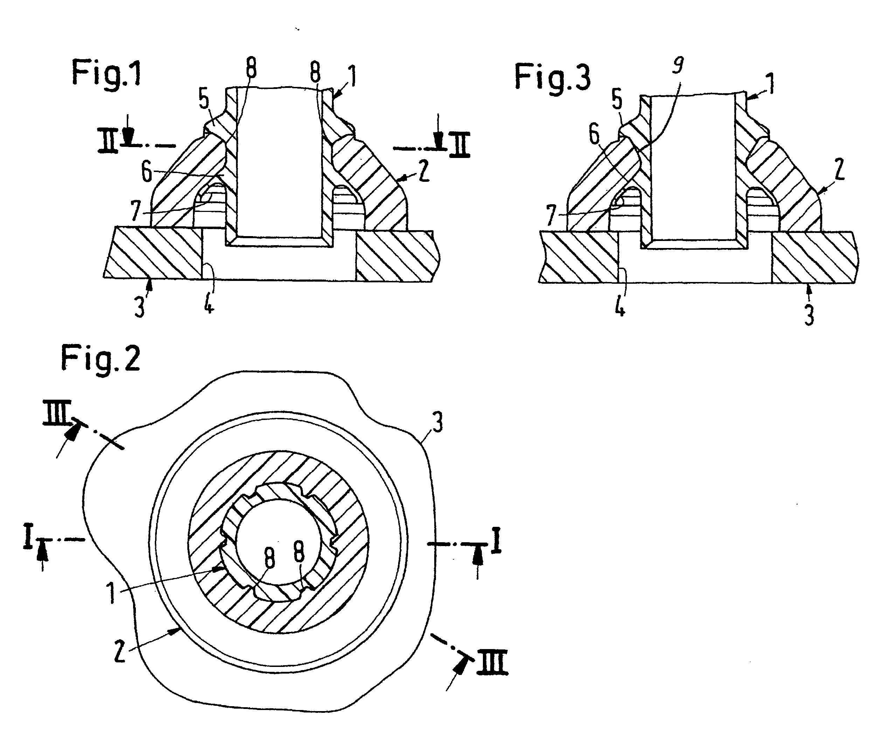

Der in den Fig. 1 bis 6 der Zeichnungen dargestellte rohrartige Stutzen besteht aus einem rohrförmigen ersten Teil 1, der überwiegend thermoplastischen Kunststoff, insbesondere Polyamid, aufweist, und einem ringförmigen zweiten Teil 2, der überwiegend thermoplastischen Kunststoff, insbesondere Polyethylen, hier hochdichtes Polyethylen (HDPE), aufweist. Beide Teile 1 und 2 können mit Glas- und/oder Kohleteilchen oder dergleichen verstärkt sein, vorzugsweise ist Teil 1 verstärkt und Teil 2 unverstärkt. Alternativ kann Teil 1 verstärktes HDPE und Teil 2 unverstärktes HDPE aufweisen. In allen Fällen ist Teil 1 kaum und Teil 2 stärker durch Kraftstoffe, wie Benzin oder Dieselöl, oder andere Flüssigkeiten quellfähig.

Der Stutzen wird an der Außenseite eines Behälters 3 aus überwiegend thermoplastischem Kunststoff, insbesondere Polyethylen, hier eines Kraftstofftanks eines Kraftfahrzeugs, um eine Öffnung 4 des Behälters 3 herum durch eine Schmelzverbindung befestigt. Der Teil 1 ist nur teilweise dargestellt. Der nicht dargestellte Abschnitt kann eine geradlinige oder abgewinkelte Verlängerung des dargestellten Abschnitts des Teils 1 bilden und für den Anschluß eines Schlauches, sei es in Form einer Steckverbindung oder mittels einer Schlauchschelle, ausgebildet sein. Der Teil 1 hat zwei umlaufende Rippen 5 und 6, von denen die Rippe 6 etwa konisch durch eine umlaufende, biegsame Lippe 7 verlängert ist, die sich zum Behälter 3 hin erstreckt und verjüngt.

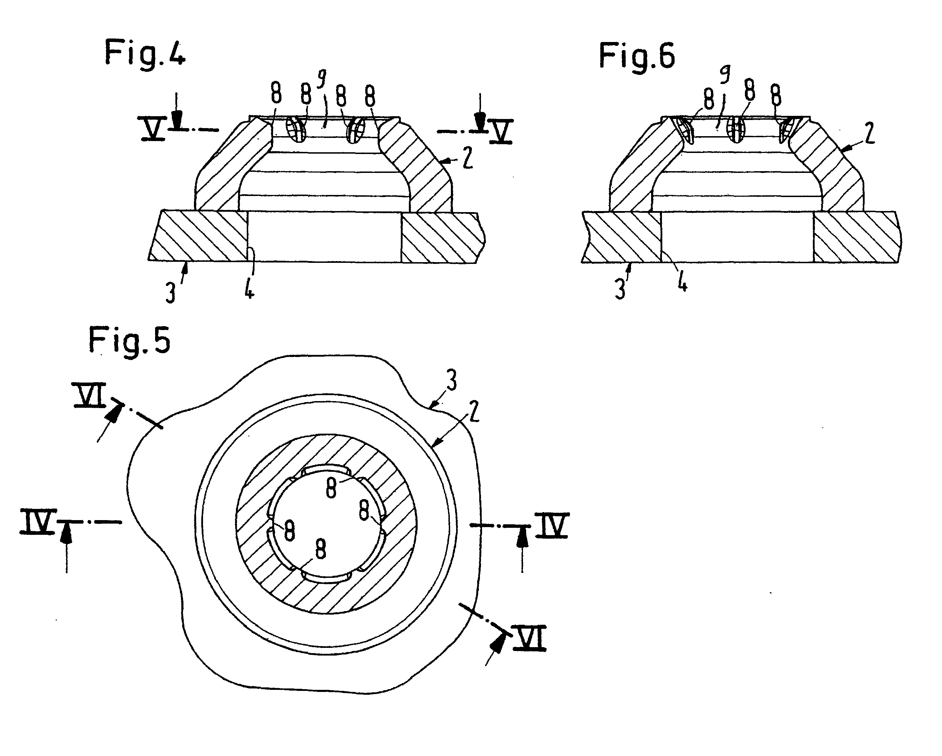

Der ringförmige zweite Teil 2 ist im wesentlichen glokkenförmig ausgebildet und hat auf der Innenseite seines dem Behälter 3 abgekehrten Randes radiale Vorsprünge 8, die sich auf einer nach innen abfallenden Schräge 9 dieses Randes etwa axial erstrecken und deren axialer wie auch transversaler Querschnitt eine weitgehend trapezförmige Kontur aufweist, vgl. insbesondere Fig. 4 und 6.

Zunächst wird der Teil 2 in einem Formwerkzeug im Spritzgußverfahren hergestellt. Dann wird der Teil 1 ebenfalls in einem den Teil 2 aufnehmenden Formwerkzeug im Spritzgußverfahren hergestellt und dabei gleichzeitig um die Innenseite des Teils 1 herumgespritzt, so daß der den kleineren Durchmesser aufweisende, vom Behälter 3 abgekehrte Rand des zweiten Teils 2 den ersten Teil 1 zwischen den Rippen 5 und 6 umgibt und stoffschlüssig mit dem Teil 1 verbunden wird. Bei dem Umspritzen des Teils 2 mit dem Teil 1 werden gleichzeitig auch die Vorsprünge 8 in dem geschmolzenen Material des Teils 1 eingebettet. Im ausgehärteten Zustand bilden dann die in das Material des Teils 1 eingreifenden Vorsprünge 8 eine Verdrehsicherung gegen eine unbeabsichtigte, relative Verdrehung der beiden Teile 1 und 2. Beim Umspritzen des Teils 2 wird dieser durch den Druck des in Fig. 1 und 2 von oben axial in das Formwerkzeug eingespritzten Materials des Teils 1 aufgrund der Schräge 9 radial nach außen fest gegen die Innenseite des Formwerkzeugs gedrückt, so daß der Teil 2 durch die axiale Spritzdruckkomponente weniger leicht verformt wird.

Nach dem Einspritzen des Teils 1 in das Teil 2 deckt die mit der Innenseite des zweiten Teils 2 stoffschlüssig verbundene, umlaufende, biegsame Lippe 7 auch einen erheblichen Teil der Innenseite des zweiten Teils 2 ab, während der Teil 2 auf seiner radial äußeren Seite, bis auf seinen oberen Rand, weitgehend freiliegt.

Statt den Teil 1 innen um den vorgefertigten Teil 2 herumzuspritzen, ist es auch möglich, den Teil 2 außen um den Teil 1 herumzuspritzen.

Nachdem die beiden Teile 1 und 2 stoffschlüssig verbunden sind, wird der Teil 2 mit seiner dem Behälter 3 zugekehrten Stirnfläche auf der Außenseite des Behälters 3 in einem radialen Abstand vom Loch 4 angeschmolzen. Zur Herstellung der Schmelzverbindung wird das Spiegelschweißverfahren angewandt. Dabei wird eine Metallplatte zwischen der Stirnfläche des Teils 2 und der Außenseite des Behälters 3 in erhitztem Zustand angeordnet, wobei die zu verbindenden Flächen geschmolzen werden. Danach wird die erhitzte Platte entfernt. Anschließend werden die Stirnfläche des Teils 2 und die Außenseite des Behälters 3 im geschmolzenen Zustand zusammengedrückt. Da die Lippe 7 noch eine schmale Ringfläche zwischen sich und der Stirnfläche des Teils 2 frei läßt, kann der beim Anschmelzen des Teils 2 am Behälter 3 entstehende Schweißwulst nicht nur radial nach außen, sondern auch radial nach innen ausweichen. Statt des Spiegelschweißverfahrens kann auch ein anderes Schweißverfahren angewandt werden, z.B. das Reib- oder Ultraschallschweißverfahren.

Das eine Ende des Teils 1 ragt in die Öffnung 4 des Behälters 3, läßt jedoch einen geringen Zwischenraum zwischen seiner Außenseite und der Innenseite der Öffnung 4 frei. Hierbei ist zu berücksichtigen, daß die Darstellung in den Fig. 1 bis 6 etwa dem Maßstab von 5:1 entspricht. Die tatsächlichen Abmessungen sind mithin erheblich kleiner als dargestellt.

Durch den Spalt zwischen dem Ende des Teils 1 und der Öffnung 4 kann mithin Kraftstoff aus dem Behälter 3 an die axial schmale Ringfläche auf der Innenseite des Teils 2 zwischen der Lippe 7 und der Außenseite des Behälters 3 gelangen. Da das stärker als das des Teils 1 quellfähige Material des Teils 2 bei Berührung mit Benzin oder Öl aufquillt und der Teil 2 auf seiner radial äußeren Seite freiliegt, während seine Innenseite zum größten Teil abgedeckt ist, würde die Quellung stärker radial nach außen als nach innen erfolgen. Einer im Bereich der Lippe 7 nach innen auftretenden Quellung würde die biegsame Lippe 7 ausweichen, ohne einzureißen. Der Kraftstoff könnte daher auch nicht im Bereich der Lippe 7 mit der Innenseite des Teils 2 in Berührung kommen. Auch ein Hindurchdringen des Kraftstoffs längs der Verbindungsfläche zwischen der Dichtlippe 7 und der Innenseite des Teils 2 bis in die Nähe des form- und kraftschlüssigen Verbindungsbereichs zwischen dem den kleineren Durchmesser aufweisenden Rand des Teils 2 und dem Teil 1 wäre aufgrund des langen Weges, den der Kraftstoff bis dahin zurücklegen müßte, weitgehend ausgeschlossen.

Die Gefahr einer übermäßigen Quellung des Teils 2 durch die Berührung mit Kraftstoff, so daß der Teil 2 einen Riß erhielte oder übermäßig verformt würde, ist mithin weitgehend ausgeschlossen. Dementsprechend bliebe auch die Verbindung zwischen den Teilen 1 und 2 sowie zwischen dem Teil 2 und dem Behälter 3 unversehrt und dicht.

## Patentansprüche

1. Rohrartiger Stutzen (1, 2) zum Anschließen an einer Öffnung (4) eines Behälters (3) aus überwiegend thermoplastischem Kunststoff, insbesondere Polyethylen, mit einem rohrförmigen ersten Teil (1), der überwiegend thermoplastischen, allenfalls schwach quellfähigen Kunststoff aufweist, und mit einem ringförmigen zweiten Teil (2) aus überwiegend thermoplastischem, stärker quellfähigem Kunststoff, der mit seinem den kleineren Durchmesser aufweisenden ersten Rand zwischen zwei den ersten Teil (1) umgebenden Rippen (5, 6) durch Umspritzen des einen mit dem anderen der beiden Teile (1, 2) stoff- und formschlüssig mit dem ersten Teil (1) verbunden und mit seinem den größeren Durchmesser aufweisenden zweiten Rand auf dem Rand der Öffnung (4) des Behälters (3) stoffschlüssig zu befestigen ist, **dadurch gekennzeichnet, daß** der zweite Teil (2) im wesentlichen glockenförmig ausgebildet ist und die zwischen seinen Rändern liegende Rippe (6) eine mit der Innenseite des zweiten Teils (2) verschmolzene umlaufende, biegsame Lippe (7) aufweist, die sich zum zweiten Rand des zweiten Teils (2) hin erstreckt, so daß der größte Teil der Innenseite des zweiten Teils (2) durch den ersten Teil (1) abgedeckt ist.

2. Stutzen nach Anspruch 1, **dadurch gekennzeichnet, daß** der zweite Teil (2) auf der Innenseite seines ersten Randes mit radialen Vorsprüngen (8) versehen ist, die in das Material des ersten Teils (1) zwischen den Rippen (5, 6) eingreifen.

3. Stutzen nach Anspruch 2, **dadurch gekennzeichnet, daß** sich die Vorsprünge (8) im zweiten Teil (2) axial erstrecken und sowohl ihr transversaler als auch ihr axialer Schnitt eine weitgehend trapezförmige Kontur aufweist.

4. Stutzen nach einem der Ansprüche 1 bis 3, **dadurch gekennzeichnet, daß** der erste Rand des zweiten Teils (2) eine nach innen abfallende Schräge (9) aufweist.

## Claims

1. Pipe-shaped connecting piece (1, 2) for attachment to an opening (4) of a container (3) comprised primarily of thermoplastic material, in particular, polyethylene, having a tubular first part (1), which is comprised primarily of a thermoplastic material, which has at most a slight swelling capacity, and further having an annular second part (2) comprised primarily of thermoplastic material, which has a greater swelling capacity, wherein the annular second part with its first rim having a smaller diameter is connected in a material-bonding and form-locking way to the first part between two ribs (5, 6) surrounding the first part (1) by injection molding one part around the other of the two parts (1,2) and is to be fastened with its second rim having the larger diameter to the edge of the opening (4) of the container (3) by material-bonding, **characterized in that** the second part (2) is substantially bell-shaped and the rib (6) positioned between its rims comprises a circumferential flexible lip (7) fused to the inner side of the second part (2), the lip extending toward the second rim of the second part (2) so that the majority of the inner side of the second part (2) is covered by the first part.

2. Pipe-shaped connecting piece according to claim 1, **characterized in that** the inner side of the first rim of the second part (2) is provided with radial projections (8) which engage the material of the first part (1) between the ribs (5, 6).

3. Pipe-shaped connecting piece according to claim 2, **characterized in that** the projections (8) extend axially within the second part (2) and wherein their transverse as well as axial cross-section has a substantially trapezoidal contour.

4. Pipe-shaped connecting piece according to one of the claims 1 to 3, **characterized in that** the first rim of the second part (2) has a radially inwardly descending slanted portion (9).

## Revendications

1. Embout tubulaire (1, 2) pour raccordement sur une ouverture (4) d'un récipient (3), essentiellement en matière synthétique thermoplastique, en particulier du polyéthylène, doté d'une première partie tubulaire (1) présentant essentiellement de la matière synthétique thermoplastique, tout au plus peu apte au gonflement et d'une deuxième partie annulaire (2), essentiellement en matière synthétique thermoplastique, plus fortement apte au gonflement, qui est jointe à la première partie (1) par crabot et collage positif, par son premier bord présentant le plus petit diamètre au milieu de deux nervures (5, 6) enveloppant la première partie (1) par enrobage de l'une des parties (1, 2) par l'autre de ces parties et qui est à fixer par collage positif sur le bord de l'ouverture (4) du récipient (3) par son deuxième bord présentant le plus grand diamètre, **caractérisé en ce que** la deuxième partie (2) est conçue sensiblement en forme de cloche et **en ce que** la nervure (6) qui se trouve entre ses bords présente un crampon (7) souple, faisant tout le tour et étant soudé à la face intérieure de la deuxième partie (2), lequel crampon s'étend en direction du deuxième bord de la deuxième partie (2) de sorte que la plus grande partie de la face intérieure de la deuxième partie (2) est couverte par la première partie (1).

2. Embout selon la revendication 1 **caractérisé en ce que** la deuxième partie (2) est dotée de saillies radiales (8) sur la face intérieure de son premier bord, lesquelles saillies se prennent dans la matière de la première partie (1) entre les nervures (5, 6).

3. Embout selon la revendication 2 **caractérisé en ce que** les saillies (8) s'étendent axialement dans la deuxième partie (2) et **en ce que** leur coupe, tant axiale que transversale, présente un profil sensiblement trapézoïdale.

4. Embout selon l'une quelconque des revendications 1 à 3 **caractérisé en ce que** le premier bord de la deuxième partie (2) présente un biseau (9) incliné vers l'intérieur.
